# EUROPÄISCHE PATENTSCHRIFT

(11) **EP 2 615 243 B1**
(45) Veröffentlichungstag und Bekanntmachung des Hinweises auf die Patenterteilung: **30.08.2017**
(21) Anmeldenummer: 12150838.6
(22) Anmeldetag: 11.01.2012
(51) Int. Cl.: F01D 5/14, F01D 5/18, F01D 5/28, F01D 9/04

(54) **Schaufelkranzsegment für eine Strömungsmaschine und Verfahren zur Herstellung**
Blade ring segment for a fluid flow engine and method for producing the same
Segment de couronne d'aubes pour une turbomachine et son procédé de fabrication

(43) Veröffentlichungstag der Anmeldung: 17.07.2013
(73) Patentinhaber: MTU Aero Engines AG, 80995 München (DE)
(72) Erfinder: Schlemmer, Markus, 84048 Mainburg/Wambach (DE); Rozak, Marcin, 37-500 Jaroslaw (PL); Buck, Alexander, 80997 München (DE)

(56) Entgegenhaltungen:
- EP-B1- 1 131 176
- WO-A1-00/12869
- WO-A1-2005/008032
- US-A- 5 743 708

## Beschreibung

### HINTERGRUND DER ERFINDUNG

### GEBIET DER ERFINDUNG

Die vorliegende Erfindung betrifft ein Schaufelkranzsegment für eine Strömungsmaschine mit mindestens einem Deckband, welches sich entlang eines Kreissegments erstreckt und einstückig mit mindestens 3 Schaufeln verbunden ist, die sich jeweils radial vom Deckband erstrecken und jeweils hohl mit mindestens einem Kanal ausgebildet sind, wobei das Schaufelkranzsegment einstückig durch Gießen und gerichtetes Erstarren ausgebildet ist. Darüber hinaus betrifft die vorliegende Erfindung ein entsprechendes Verfahren zur Herstellung eines derartigen Schaufelkranzsegments.

### STAND DER TECHNIK

Für Strömungsmaschinen wie Gasturbinen oder Flugtriebwerke werden Leit- und Laufschaufeln eingesetzt, die aufgrund der Einsatzbedingungen bei hohen Temperaturen in korrosiven und abrasiven Umgebungen und dergleichen höchsten Anforderungen genügen müssen. Um die Leistungsfähigkeit entsprechender Strömungsmaschinen weiter steigern zu können oder die Lebensdauer derartiger Maschinen zu erhöhen, ist es erforderlich, dass entsprechende Komponenten in vielfältiger Hinsicht weiterentwickelt werden und eine geeignete Struktur mit ausgewogenem Eigenschaftsprofil gefunden wird, die den vielen unterschiedlichen Anforderungen an derartige Bauteile gerecht wird.

Beispielsweise ist in der EP 1 131 176 B1 ein einkristallines Leitschaufelsegment und ein Verfahren zu dessen Herstellung beschrieben, bei dem mehrere Leitschaufeln für eine Strömungsmaschine einstückig in einem gerichtet erstarrten Material gebildet sind. Durch die gerichtete Erstarrung des Materials zur Bildung der Schaufeln können bestimmte Eigenschaften des Materials in einer bestimmten Kristallorientierung genutzt werden, wie beispielsweise eine erhöhte Energie zur Aktivierung von Gleitebenen in einer Hauptbelastungsrichtung, so dass die Festigkeit des Bauteils erhöht wird. Allerdings bringt ein derartiges Herstellungsverfahren das Problem mit sich, dass z.B. konstruktive Einschränkungen in Kauf genommen werden müssen, um eine Realisierung der gerichteten Erstarrung zu ermöglichen.

Entsprechend werden bei einem Schaufelkranzsegment, wie es in der FR 2 928 962 gezeigt ist, zwar Schaufeln verwirklicht, die konstruktiv bestimmte Merkmale, wie beispielsweise eine hohle Ausbildung mit entsprechenden Lüftungskanälen, aufweisen, die jedoch hinsichtlich der Verwirklichung eines vorteilhaften Materialkonzepts, wie einer gerichteten Erstarrung, beschränkt sind.

Aus der WO 00/12869 A1 ist eine entlang einer Achse gerichtete Turbinenleitschaufel bekannt, die axial aufeinanderfolgend aufweist: erstens ein Schaufelprofil mit einer Profilkontur, zweitens eine Plattform mit einer Heißgasseite zur Begrenzung eines Heißgaskanales einer Turbine und einer der Heißgasseite gegenüberliegenden Kaltseite und drittens einen Befestigungsbereich zur Aufnahme des größten Teiles mechanischer Belastungen durch ein das Schaufelprofil umströmendes Arbeitsmedium.

### OFFENBARUNG DER ERFINDUNG

### AUFGABE DER ERFINDUNG

Es ist deshalb Aufgabe der vorliegenden Erfindung, ein Schaufelkranzsegment sowie ein Verfahren zur Herstellung des selben bereitzustellen, welches eine weitere Verbesserung des Schaufelkranzsegtnents hinsichtlich des Eigenschaftsprofils und der Herstellbarkeit ermöglicht.

### TECHNISCHE LÖSUNG

Diese Aufgabe wird gelöst durch ein Schaufelkranzsegment mit den Merkmalen des Anspruchs 1 sowie einem Verfahren zur Herstellung eines Schaufelkranzsegments mit den Merkmalen des Anspruchs 8. Vorteilhafte Ausgestaltungen sind Gegenstand der abhängigen Ansprüche.

Die vorliegende Erfindung zeichnet sich dadurch aus, dass ein, Schaufelkranzsegment mit mindestens einem Deckband bereitgestellt wird, mit welchem mindestens 3 Schaufeln, vorzugsweise 4 Schaufeln oder mehr Schaufeln einstückig verbunden sind, wobei die Schaufeln jeweils mindestens einen Kanal aufweisen und somit hohl sind. Das entsprechende Schaufelkranzsegment ist einstückig durch Gießen und gerichtetes Erstarren ausgebildet. Zusätzlich weist das Schaufelkranzsegment im Bereich des mindestens einen Deckbands an den Austrittsöffnungen der Kanäle der Schaufeln jeweils die Öffnung umgebende und axial verlaufende erste Verstärkungsrippen sowie mindestens eine, zwischen den ersten Verstärkungsrippen verlaufende zweite Verstärkungsrippe auf. Durch diese Maßnahme ist es möglich, die hohlen Schaufeln und das Deckband aus einem Material herzustellen, welches gerichtet erstarrt werden kann, sodass neben den konstruktiven Vorteilen eines Schaufelkranzsegments mit möglichst vielen Schaufeln und einer hohlen Ausbildung der Schaufeln auch die Vorteile einer gerichtet erstarrten Legierung genutzt werden können, da die Dimensionen im Schaufelkranzsegment für eine gerichtete Erstarrung und die Lastverteilung im Einsatzfall optimiert werden können.

Vorzugsweise können die zweiten Verstärkungsrippen versetzt zu einem Verbindungsbereich von Schaufel und Deckband angeordnet sein, so dass sie sich nicht in Verlängerung der Schaufeln befinden.

Das Schaufelkranzsegment kann ein Schaufelkranzsegment für Leit- oder Lauffschaufeln sein. Darüber hinaus kann das Schaufelkranzsegment sowohl ein inneres, als auch ein äußeres Deckband und somit zwei Deckbänder aufweisen.

Vorteilhaft ist die Ausbildung eines Schaufelkranzsegments mit mindestens 4, vorzugsweise 5 oder 6 Schaufeln, da dann ein Schaufelkranz aus wenigen Schaufelkranzsegmenten gebildet werden kann, was die Montagekosten erniedrigt.

Das Deckband kann im Querschnitt in axialer Richtung, also in einer Richtung parallel zu einer Drehachse der Strömungsmaschine, im Wesentlichen eine U-artige Form aufweisen, wobei die axial verlaufenden ersten und zweiten Verstärkungsrippen zwischen den die stirnseitigen Wände des Deckbands formenden Schenkeln der U-artigen Form angeordnet sind.

Die Verstärkungsrippen können vorzugsweise so ausgebildet sein, dass sie nicht über die stirnseitigen Wände des Deckbands in radialer Richtung hervorstehen. Allerdings können die Verstärkungsrippen in sich, d.h. entlang einer ihrer Dimensionen, oder zueinander unterschiedliche Ausdehnungen in Breiten-, Höhen- oder Längsrichtung aufweisen und/oder sich in Bereiche der stirnseitigen Wände des Deckbands erstrecken.

Ein entsprechend ausgebildetes Schaufelkranzsegment kann gerichtet erstarrt ausgebildet werden, wobei zur Ausbildung eine geeignete Form bereitgestellt wird, in der ein oder mehrere Impfkristalle angeordnet werden, sodass nach dem Ausgießen der Form mit dem geschmolzenen Material zur Bildung des Schaufelkranzsegments bei einer entsprechenden Abkühlung der Schmelze dieses mit einer gewünschten Kristallorientierung erstarrt.

### KURZBESCHREIBUNG DER FIGUREN

Die beigefügten Zeichnungen zeigen in einer rein schematischen Darstellung in
Fig. 1 eine perspektivische Darstellung eines erfindungsgemäßen Schau- felkranzsegments, und in
Fig. 2 eine perspektivische Darstellung einer zweiten Ausführungsform eines erfindungsgemäßen Schaufelkranzsegments.

### AUSFÜHRUNGSBEISPIELE

Weitere Vorteile, Kennzeichen und Merkmale der vorliegenden Erfindung werden bei der nachfolgenden detaillierten Beschreibung von Ausführungsbeispielen anhand der beigefügten Figuren deutlich. Allerdings ist die Erfindung nicht auf diese Ausführungsbespiele beschränkt.

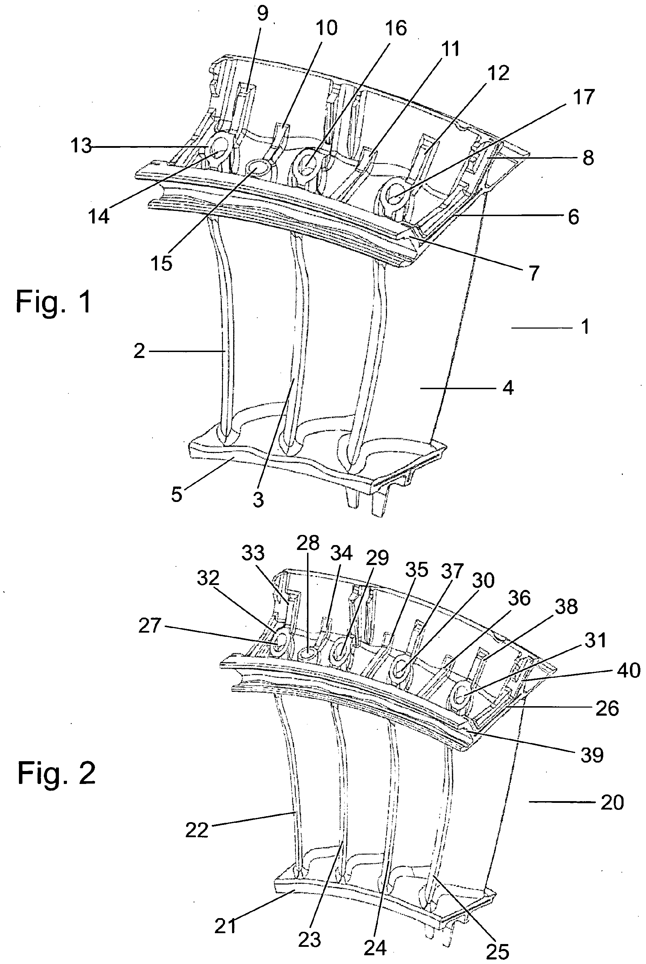

Die Figur 1 zeigt ein Schaufelkranzsegment 1 mit drei Schaufeln 2,3,4, die jeweils an einem unteren Deckband 5 und einem oberen Deckband 6 angeordnet sind. Das obere Deckband 6 weist eine im Wesentlichen U-artige Form auf, wobei die stirnseitigen Wände 7,8 des Deckbands 6 die Schenkel der U-Form bilden.

Die Schaufeln 2,3,4 sind hohl ausgebildet und entsprechend sind im Bereich des oberen Deckbandes 6 Kernauszugsöffnungen 14,15,16,17 vorgesehen, mittels derer die Kerne, die beim Gießen des Schaufelkranzsegments 1 den Hohlraum der Schaufeln 2,3,4 ausbilden, nach dem Erstarren der Schmelze aus den Hohlräumen der Schaufeln 2,3,4 entfernt werden können. Jede Schaufel weist somit mindestens eine Öffnung auf. Es ist jedoch auch möglich, dass mehrere Öffnungen pro Schaufel bzw. pro Hohlraum einer Schaufel vorgesehen sind.

Das Schaufelkranzsegment 1 wird nach dem Gießen gerichtet erstarrt, d.h. es wird eine bevorzugte Orientierung der Kristallite des Schaufelkranzsegments 1 eingestellt. Dazu werden in eine Gießform vor dem Abgießen des Schaufelkranzsegments 1 ein oder mehrere Impfkristalle eingegeben, die zusammen mit einer geeigneten Abkühlung dafür sorgen, dass die Schmelze so erstarrt, dass die Kristallite mit ihrem Gitter in einer bestimmten Richtung ausgerichtet sind. Damit lassen sich Eigenschaften des Materials, die in einer bestimmten Kristallorientierung auftreten, für das gegossene Bauteil nutzen, ohne ein einkristallines Bauteil herstellen zu müssen.

Das gezeigte Schaufelkranzsegment 1 weist im Bereich der Öffnungen 14,15, 16,17 Verstärkungsrippen 13 auf, die die jeweiligen Öffnungen 14,15,16,17 umgeben (nur die Verstärkungsrippe 13 um die Öffnung 14 ist mit einem entsprechenden Bezugszeichen versehen).

Zusätzlich sind Verstärkungsrippen 9, 10, 12 vorgesehen, die sich in axialer Richtung, also in einer Richtung parallel zu einer Drehachse der Strömungsmaschine, in welcher das Schaufelkranzsegment 1 verwendet wird, erstrecken.

Die Verstärkungsrippen 9,10,12 erstrecken sich von den Verstärkungsrippen 13 um die Öffnungen 14,15,16,17 und verlaufen bis zu den stirnseitigen Wänden 7,8 und teilweise entlang von diesen. Zusätzlich ist zwischen den Öffnungen 16 und 17 eine zusätzliche Verstärkungsrippe 11 vorgesehen, die sich von der stirnseitigen Wand 7 zur stirnseiteigen Wand 8 erstreckt und teilweise entlang der stirnseitigen Wand 8 verläuft. Die Verstärkungsrippe 11 (zweite Verstärkungsrippe) verläuft parallel zu den Verstärkungsrippen 9,10,12 (erste Verstärkungsrippen), jedoch unabhängig von den Kernauszugsöffnungen 14,15,16,17 und den diese umgebenden Verstärkungsrippen 13 (erste Verstärkungsrippen). Außerdem ist die Verstärkungsrippe außerhalb eines Verbindungsbereichs von Schaufeln 2,3,4 und Deckband 6 angeordnet.

Die Verstärkungsrippen 9,10,11,12 weisen eine Höhe parallel zur Längserstreckung der Schaufeln 2,3,4 und eine Breite parallel zur Umfangsrichtung des Schaufelkranzsegments 1 auf, die in etwa gleich sind. Allerdings ist die Höhe der Verstärkungsrippen 9,10,11,12 kleiner als die Höhe der Verstärkungsrippen 13 um die Öffnungen 14,15,16,17. Auch die Länge der Verstärkungsrippen 9,10,11,12 in axialer Richtung ist unterschiedlich. Die Verstärkungsrippen 9,12 verlaufen beispielsweise entlang eines größeren Teils der stirnseitigen Wand 8 und weisen somit eine größere Länge auf als die Verstärkungsrippen 10,11. Hierbei ist es unerheblich, ob es sich um Verstärkungsrippen handelt, die in Verbindung mit Verstärkungsrippen 13 um die Öffnungen 14,15,16,17 sind oder um eine Verstärkungsrippe wie die Verstärkungsrippe 11 zwischen zwei Öffnungen 16 und 17.

Das erfindungsgemäße Schaufelkranzsegment 1 stellt somit ein einstückiges Schaufelkranzsegment dar, welches hohle Schaufeln 2,3,4 aufweist und welches gerichtet erstarrt ist. Das gezeigte Schaufelkranzsegment 1 ermöglicht somit nicht nur die Ausbildung eines derartigen Schaufelkranzsegments, sondern bietet auch ausgewogene Eigenschaften, da im Bereich des Deckbands 6 durch die Anordnung der Verstärkungsrippen 9,10,11,12 Spannungsspitzen bei der Belastung vermieden werden können.

Die Figur 2 zeigt eine weitere Ausführungsform des erfindungsgemäßen Schaufelkranzsegments 20, bei welchem anstatt drei Schaufeln wie beim Ausführungsbeispiel 1 vier Schaufeln in einem Schaufelkranzsegment 20 zusammen mit zwei Deckbändern 21 und 26 angeordnet sind. Ähnlich wie bei der Ausführungsfigur 1 weist das Deckband eine U-artige Form mit stirnseitigen Wänden 39 und 40 auf, die die Schenkel des U bilden. Im Bereich des Deckbands 26 sind wiederum Öffnungen 27,28,29,30,31 vorgesehen, die als Kernauszüge für die Hohlräume der Schaufeln 22,23,24,25 dienen. Bei der Ausführungsform der Figur 2 sind um die Öffnungen 27,28,29,30,31 Verstärkungsrippen 32 (wiederum nur die Verstärkungsrippe 32 um die Öffnung 27 ist mit einem Bezugszeichen versehen) vorgesehen. Zusätzlich sind wiederum Verstärkungsrippen 33,34,35,36,37,38 angeordnet, die axial von der stirnseitigen Wand 39 zur stirnseitigen Wand 40 bzw. von einer die Öffnungen 27,28,29,30,31 umgebenden Verstärkungsrippe 32 zu den jeweiligen stirnseitigen Wänden 39 und 40 verlaufen. Auch hier kann die Höhe, Länge und Breite der Verstärkungsrippen unterschiedlich ausgebildet sein. Mit dem Schaufelkranzsegment 20 der Ausführungsform der Figur 2 ist der Vorteil verbunden, dass für die Bildung eines gesamten Schaufelkranzes weniger Schaufelkranzsegmente 20 eingesetzt werden müssen und sich somit der Montageaufwand erniedrigt. Außerdem ist durch die geringere Zahl an Schaufelkranzsegmenten auch ein geringerer Aufwand bei der Bearbeitung nötig. Zudem verringert sich die Zahl der Anbauteile und die Möglichkeit zu Leckageverlusten.

Obwohl die vorliegende Erfindung anhand der Ausführungsbeispiele detailliert beschrieben worden ist, ist für den Fachmann selbstverständlich, dass die Erfindung nicht auf diese Ausführungsbeispiele beschränkt ist, sondern dass vielmehr Abwandlungen in der Weise möglich sind, dass einzelne Merkmale weggelassen oder andersartige Kombinationen von Merkmalen vorgenommen werden können, sofern der Schutzbereich der beigefügten Ansprüche nicht verlassen wird.

## Patentansprüche

1. Schaufelkranzsegment für eine Strömungsmaschine mit mindestens einem Deckband (5,6;21,26), welches sich entlang eines Kreissegments erstreckt und einstückig mit mindestens drei Schaufeln (2,3,4;22,23,24,25) verbunden ist, die sich jeweils radial vom Deckband erstrecken und jeweils hohl mit mindestens einem Kanal ausgebildet sind, wobei das Schaufelkranzsegment einstückig durch Gießen und gerichtetes Erstarren ausgebildet ist,
**dadurch gekennzeichnet, dass**
das Deckband an den Austrittsöffnungen (14,15,16,17;27,28,29,30,31) der Kanäle der Schaufeln jeweils die Öffnung umgebende und axial verlaufende erste Verstärkungsrippen sowie mindestens zwischen den ersten Verstärkungsrippen jeweils mindestens eine zweite Verstärkungsrippe aufweist.

2. Schaufelkranzsegment nach Anspruch 1,
**dadurch gekennzeichnet, dass**
die Schaufeln (2,3,4;22,23,24,25) Leit- oder Laufschaufeln sind.

3. Schaufelkranzsegment nach Anspruch 1 oder 2,
**dadurch gekennzeichnet, dass**
zwei Deckbänder (5,6;21,26) vorgesehen sind.

4. Schaufelkranzsegment nach einem der vorhergehenden Ansprüche,
**dadurch gekennzeichnet, dass**
mindestens vier Schaufeln, vorzugsweise fünf oder sechs Schaufeln in dem Schaufelkranzsegment angeordnet sind.

5. Schaufelkranzsegment nach einem der vorhergehenden Ansprüche,
**dadurch gekennzeichnet, dass**
das Deckband (6,26)im Querschnitt in axialer Richtung im Wesentlichen eine U-artige Form aufweist, wobei die axial verlaufenden ersten und zweiten Verstärkungsrippen zwischen den die stirnseitige Wände des Deckbandes formenden Schenkeln der U-artigen Form angeordnet sind und insbesondere nicht über die Schenkel hervorstehen.

6. Schaufelkranzsegment nach Anspruch 5,
**dadurch gekennzeichnet, dass**
die Verstärkungsrippen (9,10,11,12,13;32,33,34,35,36,37,38) in sich und/oder untereinander unterschiedliche Breiten oder Höhen oder zueinander unterschiedliche Längen aufweisen und sich insbesondere in den Bereich der stirnseitigen Wände des Deckbandes erstrecken.

7. Schaufelkranzsegment nach einem der vorhergehenden Ansprüche,
**dadurch gekennzeichnet, dass**
die zweiten Verstärkungsrippen versetzt zu den Verbindungsbereichen von Schaufeln und Deckband angeordnet sind.

8. Verfahren zur Herstellung eines Schaufelkranzsegments (1,20) für eine Strömungsmaschine, nach einem der vorhergehenden Ansprüche, bei welchem eine Form zur gießtechnischen Herstellung bereit gestellt wird, die Kavitäten für mindestens ein Deckband, welches sich entlang eines Kreissegments erstreckt, und für mindestens drei Schaufeln aufweist, die mit den Kavitäten des Deckbands verbunden sind und sich jeweils radial von der Kavität des Deckbandes erstrecken und zur Ausbildung mindestens eines hohlen Kanals mit einem Kernelement versehen sind, wobei die Form so ausgebildet ist, dass an den Austrittsöffnungen der Kanäle der Schaufeln jeweils die Öffnung umgebende und axial verlaufende erste Verstärkungsrippen sowie mindestens zwischen den ersten Verstärkungsrippen jeweils mindestens eine zweite Verstärkungsrippe gebildet werden, mit den Schritten:
- Ausgießen der Kavitäten mit einem Material, das für eine gerichtete Erstarrung geeignet ist; und
- gerichtetes Erstarren derselben.

9. Verfahren nach einem der vorhergehenden Ansprüche,
**dadurch gekennzeichnet, dass**
in die Form ein Impfkristall vor dem Gießen eingesetzt wird.

## Claims

1. Blade ring segment for a turbomachine having at least one shroud (5, 6; 21, 26), which extends along a circular segment and is connected in one piece with at least three blades (2, 3, 4; 22, 23, 24,25), each of which extend radially from the shroud and each of which is formed to be hollow with at least one channel, wherein the bade ring segment is formed in one piece by casting and directional solidification,
**characterized in that**
at the outlet openings (14, 15, 16*,* 17; 27,28.29,30, 31) of the channels of the blades, the shroud comprises in each case first reinforcing ribs running axially and surrounding the opening, and in each case at least one second reinforcing rib between the first reinforcing ribs.

2. Blade ring segment according to Claim 1,
**characterized in that**
the blades (2, 3, 4; 22, 23, 24, 25) are guide blades or rotor blades.

3. Blade ring segment according to Claim 1 or 2,
**characterized in that**
two shrouds (5, 6, 21, 26) are provided.

4. Blade ring segment according to one of the preceding Claims,
**characterized in that**
at least four blades, preferable five or six blades, are arranged in the blade ring segment.

5. Blade ring segment according to one of the preceding Claims,
**characterized in that**
the shroud (6. 26) comprises a substantially U-like shape in cross section in the axial direction, wherein the axially running first and second reinforcing ribs are arranged between the legs of the U-like shape forming the front-side walls of the shroud and in particular do not protrude over the legs.

6. Blade ring segment according to Claim 5,
**characterized in that**
the reinforcing ribs (9, 10, 11, 12, 13; 32, 33, 34, 35, 36, 37,38) have in and/or among each other different widths or heights or different lengths than each other and extend in particular in the region of the front-side walls of the shroud.

7. Blade ring segment according to one of the preceding Claims,
**characterized in that**
the second reinforcing ribs are arranged offset from the connecting regions of the blades and shroud.

8. Method for producing a blade ring segment (1, 20) for a turbomachine, according to one of the preceding Claim, in which a mold is made available for casting-related production, which comprises cavities for at least one shroud, which extends along a circular segment, and for at least three blades, which are connected to the cavities of the shroud and each of which extend radially from the cavity of the shroud and are provided with a core element for forming at least one hollow channel, wherein the mold is formed such that, at the outlet openings of the channels of the blades, in each case first reinforcing ribs running axially and surrounding the opening and in each case at least one second reinforcing rib between the first reinforcing ribs are formed, having the following steps:
- dispensing with a material which is suitable for directional solidification into the cavities; and
- directional solidification of same.

9. Method according to one of the preceding Claims,
**characterized in that**
a seed crystal is inserted into the mold prior to the casting.

## Revendications

1. Segment de couronne d'aubes pour une turbomachine avec au moins un anneau de renforcement (5, 6; 21, 26), qui s'étend le long d'un segment de cercle et est relié d'un seul tenant à au moins trois aubes (2, 3, 4; 22, 23, 24, 25), qui s'étendent respectivement radialement de l'anneau de renforcement et sont respectivement conçues en creux avec au moins un canal, dans lequel le segment de couronne d'aubes est formé d'un seul tenant par coulée et consolidation dirigée,
**caractérisé en ce que**
l'anneau de renforcement présente sur les ouvertures de sortie (14, 15,16,17; 27, 28, 29, 30, 31) des canaux des aubes respectivement des premières nervures de renfort entourant l'ouverture et s'étendant axialement ainsi que respectivement au moins une seconde nervure de renfort au moins entre les premières nervures de renfort.

2. Segment de couronne d'aubes selon la revendication 1,
**caractérisé en ce que**
les aubes (2, 3, 4; 22, 23, 24, 25) sont des aubes directrices ou des aubes mobiles.

3. Segment de couronne d'aubes selon la revendication 1 ou 2,
**caractérisé en ce que**
il est prévu deux anneaux de renforcement (5, 6; 21, 26).

4. Segment de couronne d'aubes selon l'une quelconque des revendications précédentes,
**caractérisé en ce que**
au moins quatre aubes, en particulier cinq ou six aubes, sont agencées dans le segment de couronne d'aubes.

5. Segment de couronne d'aubes selon l'une quelconque des revendications précédentes,
**caractérisé en ce que**
l'anneau de renforcement (6, 26) présente sensiblement une forme en U en section transversale dans la direction axiale, dans lequel lès premières et secondes nervures de renfort s'étendant axialement sont agencées entre les aubes de forme en U constituant les parois avant de l'anneau de renforcement et, en particulier, ne font pas saillie des aubes.

6. Segment de couronne d'aubes selon la revendication 5,
**caractérisé en ce que**
les nervures de renfort (9, 10, 11, 12, 13; 32, 33, 34, 35, 36, 37, 38) présentent des largeurs ou des hauteurs différentes en soi et/ou l'une de l'autre ou des longueurs différentes l'une de l'autre et s'étendent en particulier dans la zone des parois avant de l'anneau de renforcement.

7. Segment de couronne d'aubes selon l'une quelconque des revendications précédentes,
**caractérisé en ce que**
les secondes nervures de renfort sont agencées décalées vers les zones de liaison des aubes et de l'anneau de renforcement.

8. Procédé de fabrication d'un segment de couronne d'aubes (1, 20) pour une turbomachine selon l'une quelconque des revendications précédentes, dans lequel on prépare un moule pour la fabrication en technique de coulée, lequel moule présente des cavités pour au moins un anneau de renforcement, qui s'étend le long d'un segment de cercle, et pour au moins trois aubes, qui sont reliées aux cavités de l'anneau de renforcement et s'étendent respectivement radialement de la cavité de l'anneau de renforcement et sont pourvues, pour former au moins un canal creux, d'un élément central, dans lequel le moule est conçu de sorte que soient formées sur les ouvertures de sortie des canaux des aubes respectivement des premières nervures de renfort entourant l'ouverture et s'étendant axialement ainsi qu'au moins entre les premières nervures de renfort respectivement au moins une seconde nervure de renfort, le procédé comprenant les étapes consistant à :
- couler dans les cavités un matériau qui convient à une consolidation dirigée; et
- effectuer une consolidation dirigée de celles-ci.

9. Procédé selon l'une quelconque des revendications précédentes,
**caractérisé en ce que :**
l'on introduit dans le moule un germe cristallin avant la coulée.
